# EUROPÄISCHE PATENTANMELDUNG

(11) **EP 1 138 561 A2**
(43) Veröffentlichungstag der Anmeldung: **04.10.2001**
(21) Anmeldenummer: 01103905.4
(22) Anmeldetag: 17.02.2001
(51) Int. Cl.: B60R 25/00, B60R 25/04

(54) **Vorrichtung zum Datenaustausch mit einem Kraftfahrzeug**

(30) Priorität: 29.03.2000 DE 10015644
(71) Anmelder: ROBERT BOSCH GMBH, 70442 Stuttgart (DE)
(72) Erfinder: Gehrke, Helmar-Steffen, 71735 Eberdingen/Hochdorf (DE)

(57) **Zusammenfassung**

Die Erfindung betrifft eine Vorrichtung zum Datenaustausch mit einem Kraftfahrzeug, mit einem tragbaren Transponder (16), der mit einem Speicher (14) zum Speichern einer Berechtigungsinformation versehen ist, wobei der Transponder (16) Mittel zum Datenaustausch mit einem Fahrzeugverwaltungssystem (12) aufweist, über welche die Berechtigungsinformation durch das Fahrzeugverwaltungssystem (12) beeinflußbar ist, wobei der Transponder (16) weiterhin Datenaustauschmittel zum Senden der Berechtigungsinformation an ein in einem Fahrzeug angeordnetes Steuergerät (20) aufweist zur Erlangung der Fahr- und/oder Zugangsberechtigung des Fahrzeugs.

## Beschreibung

### Stand der Technik

Die Erfindung geht aus von einer Vorrichtung zum Datenaustausch mit einem Kraftfahrzeug nach der Gattung des unabhängigen Anspruchs. Aus der DE-A 196 48 042 ist ein Fahrzeug mit einem Schlüssel bekannt. Dieser Schlüssel dient der Identifizierung des berechtigten Benutzers. In diesem Schlüssel sind Daten wie beispielsweise Kundenanschrift, das Kennzeichen des Fahrzeugs, der Kilometerstand etc. abgelegt. Der Schlüssel wird in einer Werkstatt in ein Lesegerät eingeführt, das mit einem Computer verbunden ist und auf dessen Bildschirm zur Auslesung der Schlüsseldaten eine Dialogführung vorgenommen wird. Die Anzeige ist jedoch nur möglich, wenn ein Paßwort manuell eingegeben wird.

Diese Anordnung ist nur in Verbindung mit einem externen Gerät für die Auslesung interessierender Fahrzeugdaten geeignet.

Der Erfindung liegt die Aufgabe zugrunde, den Funktionsumfang des tragbaren Schlüssels zu erweitern. Diese Aufgabe wird durch die Merkmale des unabhängigen Anspruchs gelöst.

### Vorteile der Erfindung

Die erfindungsgemäße Vorrichtung zum Datenaustausch mit einem Kraftfahrzeug umfaßt einen tragbaren Transponder, der mit einem Speicher zum Speichern zumindest einer Berechtigungsinformation versehen ist. Der Transponder enthält Mittel zum Datenaustausch mit einem Fahrzeugverwaltungssystem, über welches die Berechtigungsinformation beeinflußbar ist. Der Transponder umfaßt Datenaustauschmittel zum Senden der Berechtigungsinformation an ein in einem Fahrzeug angeordnetes Steuergerät. Im Rahmen eines schlüssellosen Zugangs- oder Fahrberechtigungssystems ist ohnehin ein tragbarer Transponder vorhanden. Anhand des tragbaren Transponders weist der Benutzer seine Zugangs- oder Fahrberechtigung nach. Erfindungsgemäß ist vorgesehen, dass die Berechtigungsinformation durch ein Fahrzeugverwaltungssystem beeinflußt werden kann. Das Fahrzeugverwaltungssystem ordnet einem bestimmten Transponder ein noch freies und damit zu vergebendes Fahrzeug zu, zu dem der Benutzer über den Transponder Zugang und Fahrberechtigung erhält. Das Fahrzeugverwaltungssystem kann beispielsweise bei Mietwagenfirmen eingesetzt werden.

In einer zweckmäßigen Weiterbildung ist vorgesehen, dass von dem Fahrzeugverwaltungssystem eine Zusatzinformation an den Transponder übertragen wird zur Einstellung benutzerabhängiger Funktionen im Kraftfahrzeug. Hierzu kann im Fahrzeugverwaltungssystem eine entsprechende Datenbasis vorgesehen werden, die jedem Benutzer die persönlichen Einstellungen wie beispielsweise Sitzposition, Spiegelposition usw. zuordnet. So erteilt das Fahrzeugverwaltungssystem einem bestimmten Benutzer die Zugangs- und/oder Fahrberechtigung. Zusammen mit dieser Information wird die entsprechende benutzerabhängige Zusatzinformation an den Transponder übertragen. Im Rahmen der Zugangs- und/oder Fahrberechtigungsprozedur zwischen dem Fahrzeug und dem Transponder werden diese im Transponder hinterlegten Zusatzinformationen an das im Fahrzeug angeordnete Steuergerät übertragen. Mit Hilfe der Zusatzinformationen werden beispielsweise die zugeordneten Verstellantriebe (Sitz, Spiegel) in die gewünschte Position gebracht.

In einer zweckmäßigen Ausgestaltung ist als weitere, von dem Fahrzeugverwaltungssystem an den Transponder zu übertragende Information eine Fahrzielinformation vorgesehen. Über die Datenerfassung des Fahrzeugverwaltungssystems kann der Benutzer das gewünschte Fahrziel komfortabel eingeben. Zusammen mit der Übertragung der Fahr- und/oder Zugangsberechtigungsinformation gelangt auch die Fahrzielinformation an den Transponder. Der Transponder überträgt die Fahrzielinformation an das im Fahrzeug angeordnete Steuergerät, welches die Fahrzielinformation an ein über ein Bussystem verbundenes Navigationssystem weiterleitet. Der Benutzer kann somit auf eine Eingabe des Fahrziels im Kraftfahrzeug verzichten. Dadurch erhöht sich der Komfort für den Benutzer. Dies trägt auch zu einer erhöhten Sicherheit bei, da auf eine gefährdende Fahrzieleingabe während der Fahrt verzichtet werden kann.

In einer zweckmäßigen Weiterbildung ist vorgesehen, dass das Fahrzeugverwaltungssystem bestimmte Ressourceninformationen an den Transponder weiterleitet. Als Ressourceninformationen werden solche verstanden, die eine Nutzungsbeschränkung des Fahrzeugs zur Folge haben. Hierbei kann es sich beispielsweise um eine Begrenzung der Leistung, der Höchstgeschwindigkeit, der zugelassenen Fahrzeit bzw. Strecke oder bestimmter Komfortfunktionen (Navigationssystem, Autotelefon etc.) handeln. Die Ressourceninformationen empfängt ebenfalls das im Fahrzeug angeordnete Steuergerät. Das Steuergerät leitet diese Ressourceninformationen an die entsprechenden Funktionsmodule im Kraftfahrzeug weiter. Sie stellen eine Ansteuerung im Rahmen der empfangenen Ressourcen sicher. Überschreiten die verbrauchsabhängigen Ressourcen (maximal zulässige Fahrzeit oder Fahrstrecke) einen vorgebbaren Grenzwert, werden geeignete Gegenmaßnahmen wie beispielsweise die Aktivierung einer Anzeige- und/oder Warnfunktion oder das schrittweise Stillsitzen des Kraftfahrzeugs eingeleitet. Als Ressourceninformationen können auch Komfortfunktionen steuernde Informationen verstanden werden. Je nach dem vom Benutzer gewünschten Ausstattungsgrad werden bestimmte Komfortfunktionen freigegeben oder unterdrückt.

In einer zweckmäßigen Ausgestaltung empfängt der Transponder von dem im Fahrzeug angeordneten Steuergerät eine Nutzungsgröße, die an das Fahrzeugverwaltungssystem weitergegeben wird. Als Nutzungsgröße könnte beispielsweise der aktuelle Kilometerstand verwendet werden. Daraus könnte die von dem jeweiligen Nutzer gefahrene Kilometerzahl berechnet werden. Anhand des Kilometerstands kann das Fahrzeugverwaltungssystem beispielsweise automatisch einen Inspektionstermin des zugeordneten Fahrzeugs festlegen. Damit werden ständig das Fahrzeug beschreibende Informationen in dem Fahrzeugverwaltungssystem aktualisiert. Als Nutzungsgröße könnte auch der Tankinhalt herangezogen werden. In dem Fahrzeugverwaltungssystem kann sofort überprüft werden, ob der Nutzer das Fahrzeug wieder aufgetankt hat und welcher Verbrauch dem Fahrzeug zuzuordnen ist. Diese Information dient der Optimierung des Fuhrparks oder der gezielten Auswahl eines geeigneten Fahrzeugs.

Weitere zweckmäßige Weiterbildungen ergeben sich aus weiteren abhängigen Ansprüchen und der Beschreibung.

### Zeichnung

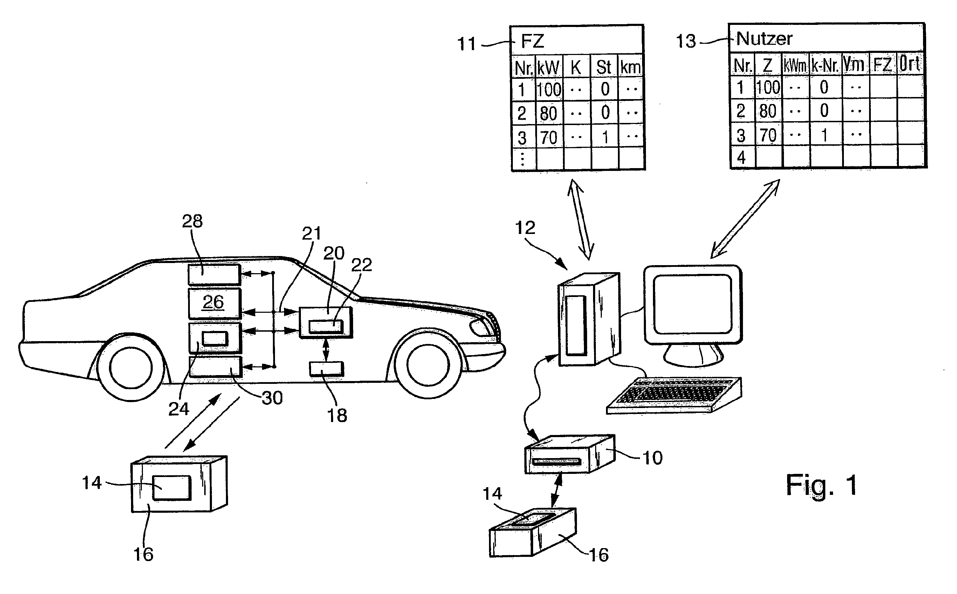

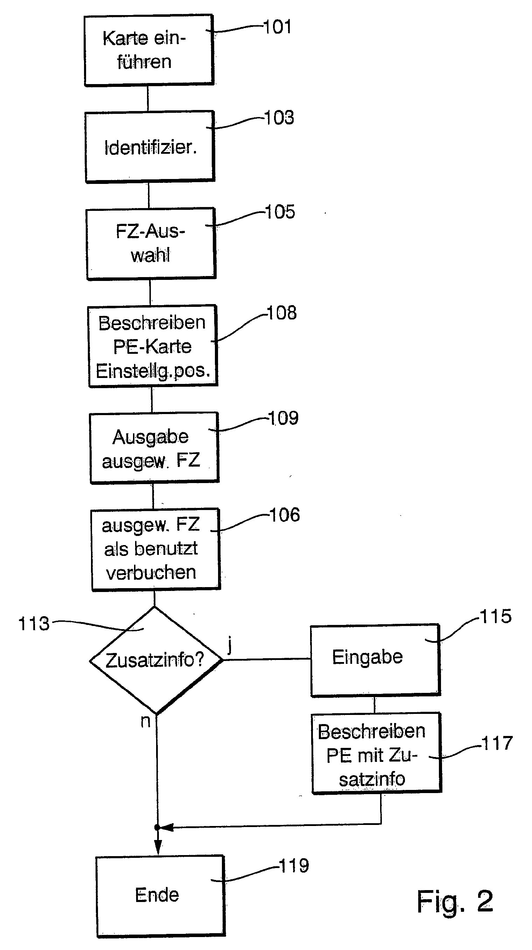

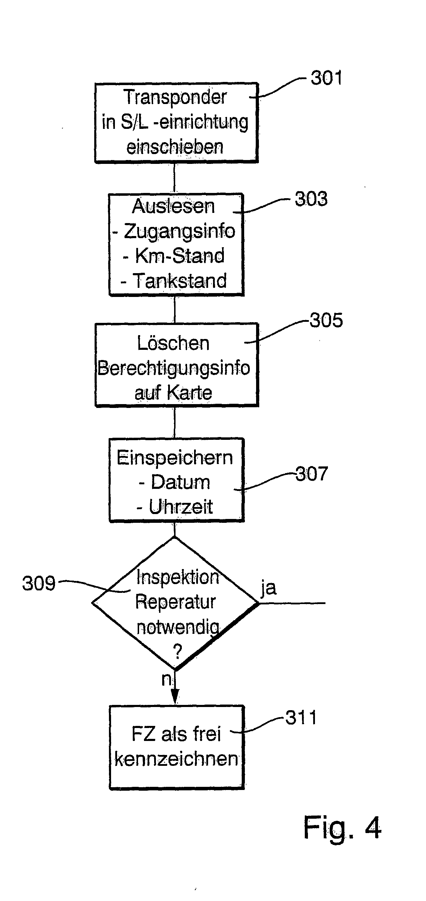

Ein Ausführungsbeispiel der Erfindung ist in der Zeichnung dargestellt und wird im folgenden näher beschrieben. Es zeigen die Figur 1 ein Blockschaltbild sowie die Figuren 2 bis 4 ein Flußdiagramm des Ausführungsbeispiels.

### Beschreibung des Ausführungsbeispiels

Ein Fahrzeugverwaltungssystem 12 umfaßt eine Schreib-/Leseeinrichtung 10, einen Bildschirm und eine Tastatur. Das Fahrzeugverwaltungssystem 12 tauscht Daten aus mit einer Fahrzeugdatenbasis 11 und einer Nutzerdatenbasis 13. In der Fahrzeugdatenbasis 11 sind fahrzeugabhängig bestimmte Fahrzeugkenngrößen hinterlegt wie beispielsweise die dem Fahrzeug zugeordnete Leistung KW, das Kennzeichen K, der Status ST, der Kilometerstand KM und gegebenenfalls die Sonderausstattungen (Klima, Navigationssystem, etc.). Die Statusinformation ST weist mehrere Zustände auf: frei, in Benutzung durch « Benutzer-Identifikation», Wartung, Reparatur, etc.

In der Nutzerdatenbasis 13 sind für jeden Nutzer bestimmte Informationen hinterlegt. Hierbei handelt es sich um eine Zusatzinformation Z, die maximal zulässige Leistung KWM, die maximal zulässige Geschwindigkeit VM (Ressourcen), die Kundennummer (oder Personalnummer) KNR, das zugeordnete Fahrzeug, der gewünschte Zielort etc. In die Schreib-/Leseeinrichtung 10 kann ein Transponder 16 eingeführt werden zum Zwecke des Datenaustausches mit dem Fahrzeugverwaltungssystem 12. In dem Transponder 16 ist ein Transponderspeicher 14 angeordnet, in dem eine Fahr- und/oder Zugangsberechtigungsinformation (Berechtigungsinformation) eingespeichert wird. Derselbe Transponder 16 tauscht Daten aus über einen Sender/Empfänger 18 mit einem in einem Fahrzeug angeordneten Steuergerät 20. Das Steuergerät 20 weist einen Speicher 22 auf. Das Steuergerät 20 ist über ein Fahrzeugbussystem 21 mit einer betriebsnotwendigen Komponente 26, einem Verstellantrieb 28, einem Navigationssytem 30 sowie einer Betriebsgrößenerfassung 24 verbunden.

Zur Initialisierung des Fahrzeugverwaltungssystems 12 müssen die entsprechenden Daten in der Fahrzeugdatenbasis 11 und der Nutzerdatenbasis 13 bereitgestellt werden. In der Fahrzeugdatenbasis 11 werden jedem Fahrzeug entsprechende Informationen zugeordnet. Hierbei kann es sich um den jeweiligen Fahrzeugtyp, das zugehörige Kennzeichen, die Leistung des Fahrzeugs KW handeln. Das Fahrzeugverwaltungssystem 12 verändert die Statusinformation ST. Wird ein Fahrzeug an einen Nutzer vergeben, wird die dem Fahrzeug zugeordnete Statusinformation ST mit "in Benutzung" überschrieben. Außerdem aktualisiert das Fahrzeugverwaltungssystem 12 anhand der empfangenen Transponderdaten den aktuellen Kilometerstand KM des entsprechenden Fahrzeugs. Für die Initialisierung des Fahrzeugverwaltungssystems 12 ist die Eingabe eines Nutzerprofils erforderlich. Diese Datenbasis könnte bereits vorab hinterlegt werden, wenn ein bekannter Personenkreis (beispielsweise Firmenangehörige) auf einen Fahrzeugpool zugreifen kann. Neben Name und Anschrift der Person könnte die entsprechende Personalnummer, Abteilung, Kostenstelle usw. eingetragen werden. Außerdem ist für jeden Nutzer eine Zusatzinformation Z hinterlegt. Hierbei handelt es sich um benutzerspezifische Einstellungen bestimmter Kraftfahrzeugfunktionen wie beispielsweise die Einstellung der Sitzposition oder der Spiegelposition. Die aktuellen Einstellungen (Zusatzinformation Z) können ergänzend auch aus dem Fahrzeug in das Fahrzeugverwaltungssystem 12 zurückgespeichert werden. Außerdem lassen sich dem jeweiligen Nutzer bestimmte Ressourcen KWM, VM zuteilen. Ein erster Nutzer darf sich beispielsweise nur eines Fahrzeugs mit einer bestimmten vorgebbaren maximal zulässigen Leistung KWM bedienen, ein anderer Nutzer ist nur für eine maximal zulässige Höchstgeschwindigkeit VM berechtigt. Weitere Ressourcen wie beispielsweise die maximal zu fahrende Kilometerzahl oder Fahrtzeit könnten ebenfalls hinterlegt werden.

Der Betrieb der in Figur 1 dargestellten Vorrichtung wird anhand der Flußdiagramme gemäß den Figuren 2 bis 4 erläutert. In dem Ablauf gemäß Figur 2 möchte ein in der Nutzerdatenbasis 13 registrierter Nutzer ein Fahrzeug mieten bzw. leihen. Hierzu führt der Benutzer einen ungeschriebenen Transponder 16 in die Schreib-/Leseeinrichtung 10 ein (Schritt 101) und identifiziert sich über die Tastatur des Fahrzeugverwaltungssystems 12 (Schritt 103). Das Fahrzeugsverwaltungssystem 12 sucht daraufhin anhand der Statusinformation ST ein noch nicht vergebenes Fahrzeug heraus. Sollten dem Benutzer nur bestimmte Ressourcen, beispielsweise eine beschränkte Leistung KWM, zur Verfügung stehen, so ermittelt das Fahrzeugverwaltungssystem 12 aus den noch nicht vergebenen Fahrzeugen eines, dessen Leistung KW die maximal zulässige Leistung KWM nicht überschreitet, Schritt 105. Intern verbucht das Fahrzeugverwaltungssystem 12 das vergebene Fahrzeug als benutzt, so dass sich die entsprechende Statusinformation ST ändert, Schritt 106. Außerdem erfolgt die Zuordnung zwischen dem Nutzer und dem benutzten Fahrzeug. Eine entsprechende den Nutzer oder das Fahrzeug identifizierende Information wird ebenfalls auf dem Transponder 16 hinterlegt. Anschließend beschreibt das Fahrzeugverwaltungssystem 12 über die Schreib-/Leseeinrichtung 10 den Transponder 16 mit einer Berechtigungsinformation. Die Fahr- und/oder Zugangsberechtigungsinformation wird in dem Transponderspeicher 14 hinterlegt. Alternativ kann vorgesehen sein, dass das Fahrzeugverwaltungssystem 12 eine bereits im Speicher 14 befindliche Berechtigungsinformation aktiviert beziehungsweise zum Auslesen freigibt. Außerdem wird die dem entsprechenden Nutzer in der Nutzerdatenbasis 13 zugeordnete Zusatzinformation Z sowie gegebenenfalls die maximal zulässige Geschwindigkeit VM an den Transponder 16 übertragen und in dem Transponderspeicher 14 abgespeichert, Schritt 107. In Schritt 109 wird dem Benutzer das von dem Fahrzeugverwaltungssystem 12 ausgewählte Fahrzeug angezeigt.

Der Benutzer wird vor die Wahl gestellt, ob er eine (weitere) Zusatzinformation Z eingeben möchte, Schritt 113. Hierbei kann der Nutzer beispielsweise sein Fahrziel über die Tastatur eingeben, Schritt 115. Diese Information gelangt über die Schreib-/Leseeinrichtung 10 ebenfalls auf den Transponder 16 bzw. dessen Speicher 14, Schritt 117. Damit ist der Entleih-/Mietvorgang abgeschlossen. Der Benutzer entnimmt den Transponder 16 der Schreib-/Leseeinrichtung 10.

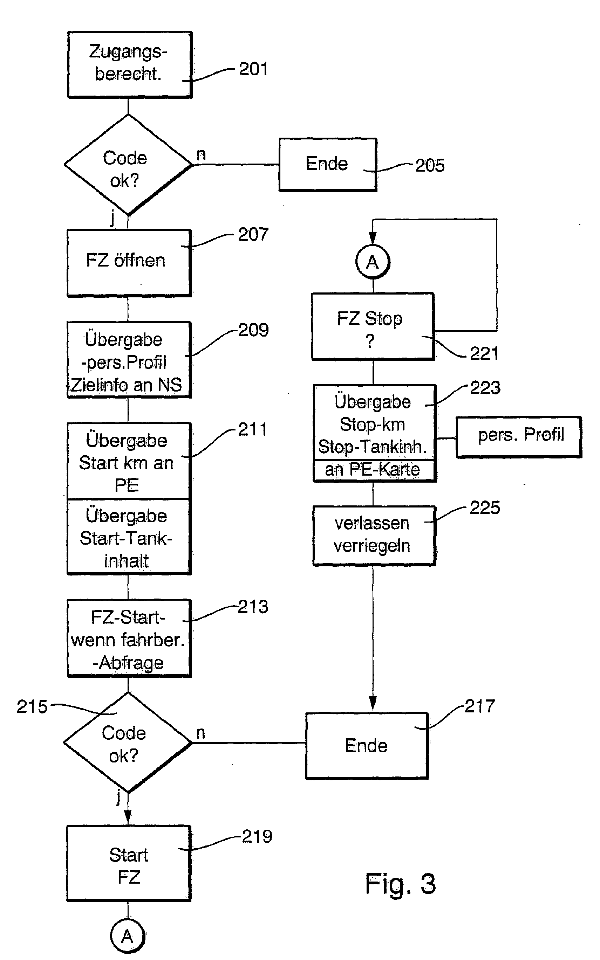

Der Benutzer begibt sich zusammen mit dem Transponder 16 zu dem Fahrzeug. In dem Speicher 22 des in dem Fahrzeug angeordneten Steuergeräts 20 ist ein (fahrzeugspezifischer) Berechtigungscode enthalten, der für einen beechtigten Nutzer mit dem in Schritt 107 auf den Transponder 16 geschriebenen übereinstimmt. Der Benutzer startet gemäß Figur 3 die Zugangsberechtigungsprozedur (Schritt 201) beispielsweise durch Ziehen am Türgriff. Dadurch veranlaßt das Steuergerät 20 den fahrzeugseitigen Sender/Empfänger 18 zur Aussendung eines Fragesignals. Der in Reichweite befindliche Transponder 16 empfängt das Fragesignal und sendet daraufhin als Antwortsignal den (fahrzeugspezifischen) Berechtigungscode an den Sender/Empfänger 18 zurück, gegebenenfalls verschlüsselt. Das Steuergerät 20 vergleicht den eingehenden Code mit einem im Speicher 22 des Steuergeräts 20 hinterlegten (Abfrage 203). Bei einer Übereinstimmung erkennt das Steuergerät 20 auf einen berechtigten Transponderbenutzer und steuert ein nicht dargestelltes Schließsystem im Sinne eines Entriegelns an, Schritt 207. Zusammen mit dem Berechtigungscode werden auch die in dem Transponderspeicher 14 hinterlegten weiteren Informationen übertragen, Schritt 209. Hierbei handelt es sich um die Zusatzinformation Z, die maximal zulässige Geschwindigkeitsinformation VM (Ressource) und den eingegebenen Zielort. Das Steuergerät 20 erkennt die eingehenden Informationen hinsichtlich ihrer Art. Es leitet die Zuordnungsinformation Z an den Verstellantrieb 28 eines Sitzes oder eines Spiegels weiter. Der Verstellantrieb 28 verfährt automatisch in die durch die Zusatzinformation Z angegebene Position. Die maximal zulässige Geschwindigkeit VM gelangt an die betriebsnotwendige Komponente 26, bei der es sich um ein Motorsteuergerät handelt. Dieses steuert den Motor so an, daß die maximal zulässige Geschwindigkeit VM nicht überschritten wird. Außerdem leitet das Steuergerät 20 den Zielort an das Navigationssystem 30 weiter. Damit kann eine manuelle oder sprachgeführte Eingabe des Zielorts im Kraftfahrzeug unterbleiben (Schritt 213).

Mit Betätigen des Startschalters kommt eine weitere Kommunikation zwischen dem Sender/Empfänger 18 und dem Transponder 16 in Gang, Schritt 213. Sie dient der Bestimmung der Fahrberechtigung und ist mit einer erneuten Abfrage des Berechtigungscodes und anschließendem Vergleich mit dem Inhalt des Speichers 22 verbunden (Abfrage 215). Für die Zugangsberechtigung und die Fahrberechtigung können auch unterschiedliche Berechtigungsinformationen vorgesehen werden. Außerdem überträgt das Steuergerät 20 über den Sender/Empfänger 18 den aktuellen Kilometerstand des Fahrzeugs, der von der Betriebsgrößenerfassung 24 bereitgestellt wird, an den Transponder 16. Damit ist in dem Transponderspeicher 14 der Anfangskilometerstand abgespeichert. Der Anfangskilometerstand müßte mit dem im Fahrzeugverwaltungssystem 16 hinterlegten identisch sein. Zur Kontrolle könnte ein Vergleich stattfinden. Sofern der vom Transponder 16 gesendete Berechtigungscode mit dem im Speicher hinterlegten übereinstimmt, wird das Fahrzeug gestartet, Schritt 219. Hierzu erhält die betriebsnotwendige Komponente 26 ein erforderliches Freigabesignal. In Abfrage 221 wird zyklisch überprüft, ob der Benutzer das Fahrzeug deaktiviert. Sollte dies der Fall sein, schließt sich Schritt 223 an. Mit "Zündung aus" wird dem Transponder 16 der aktuelle Endkilometerstand übermittelt, wie er über die Betriebsgrößenerfassung 24 an das Steuergerät 20 und über den Sender/Empfänger 18 weitergeleitet wurde. Ergänzend könnte auch eine Übertragung der Zusatzinformation Z erfolgen. Dies ist insbesondere dann zweckmäßig, wenn der Benutzer eine Änderung der Einstellungen für den Spiegel-oder Sitzantrieb vornimmt und als neue Zusatzinformation Z speichert. Dann wird diese neue Zusatzinformation Z zur Aktualisierung der in der Nutzerdatenbasis 13 hinterlegten Zusatzinformation Z über die Zwischenspeicherung im Transponder 16 herangezogen. Der Benutzer verläßt und verriegelt das Fahrzeug, Schritt 225. Der normale Nutzungsvorgang ist damit beendet.

Möchte der Benutzer das Fahrzeug wieder zurückbringen, führt er den Transponder 16 in die Schreib-/Leseeinrichtung 10 ein, Schritt 301. Die in dem Transponderspeicher 14 hinterlegten Daten werden ausgelesen und dem Fahrzeugverwaltungssystem 12 mitgeteilt, Schritt 303. Außerdem werden die ebenfalls in dem Transponderspeicher 14 hinterlegten Betriebsgrößen wie der Anfangskilometerstand und der Endkilometerstand dem Fahrzeugverwaltungssystem 12 mitgeteilt. Der Kilometerstand KM kann beispielsweise zur Ermittlung des dem Benutzer aufzuerlegenden Kostenbeitrags oder zur Überprüfung bzw. Aktivierung eines Wartungsvorgangs herangezogen werden (Abfrage 309). Außerdem kann vorgesehen sein, dass die Zusatzinformation Z des aktuellen Nutzers aus dem Transponderspeicher 16 ausgelesen wird und die in der Nutzerdatenbasis 13 hinterlegte Zusatzinformation Z ersetzt, wenn der Benutzer eine Veränderung dieser Zusatzinformationen Z im Fahrzeug vorgenommen hat und diese aktualisierte Zusatzinformation Z beispielsweise in Schritt 223 an den Transponder 16 gesendet wurde. In einem Schritt 305 löscht beziehungsweise deaktiviert die Schreib-/Leseeinrichtung 10 die bislang in dem Transponderspeicher 14 hinterlegten Informationen. Anschließend vervollständigt das Fahrzeugverwaltungssystem 12 die Informationen hinsichtlich des Datums und der Uhrzeit des Rückgabezeitpunkts, Schritt 307.

Anhand des übertragenen Fahrzeugkennungscodes/Nutzercodes verändert das Fahrzeugverwaltungssystem 12 die Statusinformation ST "frei". Das Fahrzeug wird damit als wieder verfügbar gekennzeichnet.

Es sind weitere Abwandlungen gegenüber der in Figur 1 beschriebenen Vorrichtung möglich. Insbesondere die Datenübertragung zwischen dem Transponder 16 und dem Fahrzeugverwaltungssystem 12 könnte auch über Funk, Infrarot etc. abgewickelt werden. Es könnte hier bevorzugt auf den Übertragungskanal zurückgegriffen werden, der die Kommunikation zwischen dem Transponder 16 und dem Fahrzeug sicherstellt.

Als Nutzungsinformation könnte auch der Tankinhalt vom Fahrzeug an den Transponder 16 übertragen werden zur Weiterleitung an das Fahrzeugverwaltungssystem 12. Dort könnte eine automatische Überprüfung vorgenommen werden, ob das Fahrzeug wieder vollgetankt wurde.

## Patentansprüche

1. Vorrichtung zum Datenaustausch mit einem Kraftfahrzeug, mit einem tragbaren Transponder (16), der mit einem Speicher (14) zum Speichern zumindest einer Berechtigungsinformation versehen ist, wobei der Transponder (16) Mittel zum Datenaustausch mit einem Fahrzeugverwaltungssystem (12) aufweist, über welche die Berechtigungsinformation durch das Fahrzeugverwaltungssystem (12) beeinflußbar ist, wobei der Transponder (16) weiterhin Datenaustauschmittel zum Senden der Berechtigungsinformation an ein in dem Fahrzeug angeordnetes Steuergerät (20) aufweist zur Erlangung der Berechtigung des ordnungsgemäßigen Betriebs des Fahrzeugs.

2. Vorrichtung nach Anspruch 1, **dadurch gekennzeichnet, dass** vom Fahrzeugverwaltungssystem (12) und/oder vom Steuergerät (20) zumindest eine Zusatzinformation (Z) an den Transponder (16) übertragen wird zur Einstellung benutzerabhängiger Funktionen.

3. Vorrichtung nach einem der vorhergehenden Ansprüche,
**dadurch gekennzeichnet, dass** von dem Fahrzeugverwaltungssystem (12) eine Fahrzielinformation zur Zieleingabe für ein Navigationssystem (30) an den Transponder (16) übertragen wird zur Weiterleitung an das im Fahrzeug angeordnete Navigationssystem (30).

4. Vorrichtung nach einem der vorhergehenden Ansprüche, **dadurch gekennzeichnet, dass** das Fahrzeugverwaltungssystem (12) Ressourcen (KWM, VM, TM) an den Transponder (16) überträgt zur Einschränkung des Nutzungsumfangs des Fahrzeugs.

5. Vorrichtung nach einem der vorhergehenden Ansprüche,
**dadurch gekennzeichnet, dass** eine Nutzungskenngröße (KM) des Fahrzeugs von dem Steuergerät (20) an den Transponder (16) übertragen wird.

6. Vorrichtung nach einem der vorhergehenden Ansprüche,
**dadurch gekennzeichnet, dass** das Fahrzeugverwaltungssystem (12) anhand einer Fahrzeugdatenbasis (11) eine Auswahl eines verfügbaren Fahrzeugs trifft.

7. Vorrichtung nach einem der vorhergehenden Ansprüche,
**dadurch gekennzeichnet, dass** der Transponder (16) in dem Fahrzeug erfasste Nutzungsinformationen (KM) an das Fahrzeugverwaltungssystem (12) weiterleitet.

8. Vorrichtung nach einer der vorhergehenden Ansprüche,
**dadurch gekennzeichnet, dass** die Zusatzinformation (Z) und/oder die Ressourcen (KWM, VM, TM) und/oder die Nutzungskenngröße (KM) in einer Fahrzeugdatenbasis (15) und/oder einer Nutzerdatenbasis (13) abgelegt sind.

9. Vorrichtung nach einem der vorhergehenden Ansprüche,
**dadurch gekennzeichnet, dass** der Transponder (16) Daten bidirektional sowohl mit zumindest einem im Fahrzeug angeordneten Steuergerät (20) als auch mit dem Fahrzeugverwaltungssystem (12) austauscht.
